# EUROPEAN PATENT SPECIFICATION

(11) **EP 1 339 990 B1**
(45) Date of publication and mention of the grant of the patent: **06.02.2008**
(21) Application number: 01999758.4
(22) Date of filing: 07.12.2001
(51) Int. Cl.: F16B 7/10, F16B 7/12, B62D 27/06

(54) **APPARATUS FOR SECURING A STRUT IN A STRUT SLEEVE**
VORRICHTUNG ZUR BEFESTIGUNG EINER STREBE IN EINER STREBENMUFFE
APPAREIL PERMETTANT DE FIXER UN POTELET DANS UN MANCHON A POTELET

(30) Priority: 07.12.2000 SE 0004522
(43) Date of publication of application: 03.09.2003
(73) Proprietor: Laxo Mekan Aktiebolag, S-702 21 Örebro (SE)
(72) Inventor: PERSSON, Ake, c/o Laxo Mekan AB, S-70221 ÖREBRO (SE)
(74) Representative: Avellan-Hultman, Olle
(86) International application number: PCT/SE2001/002710
(87) International publication number: WO 2002/046626

(56) References cited:
- EP-A2- 0 244 383
- EP-A2- 0 334 387
- WO-A1-88/01584
- GB-A- 1 048 810

## Description

The present invention relates to a securing system comprising struts adapted to be mounted in sleeves, and suited for use in load platform wagons/trucks, railway wagons, boats and other types of transport craft, in which shocks and/or vibrations may appear.

The invention has especially been developed for use in trucks, platform wagons, railway wagons, boats and other types of transport vehicles in which there may appear shocks and/or vibrations, especially when driving such vehicles without load. The invention, however, is the same useful for other types of struts, in connection to which the same type of problem may appear as in vehicles and other transport craft.

When transporting and other handling especially of elongated material the plane on which the material is placed or is piled is usually formed with side struts which prevent the material from sliding off the load plane in the transversal or in the longitudinal direction. The struts are put down into sleeves provided at the sides of the transport plane. During transportation and other handling of the material the struts normally are loaded in the transversal direction and provide a unit which is well kept together in combination with the stationary sleeves.

For practical reasons the struts have to be made with slightly less outer dimensions than the inner of the sleeves, and this may have as a consequence that the struts, when transported without load, may vibrate and sway to and fro in the sleeves both depending on existing unevennesses in the ground or other transport plane, and depending on the speed wind. This leads to a wear of the parts of the struts which are located moved down in the stationary sleeves. It may also happen that the struts jump up and down in their sleeves when driving the transport vehicle over uneven ground.

It is therefore important that the struts can be secured or clamp connected to the stationary sleeves, especially when driving the transport vehicle without load (empty transportation), so that said struts can not sway or jump up and down, or may in any other way move forth and back in the sleeves. Many types of solutions are known for securing of struts in sleeves.

EP 00 98 250 A1 discloses a system having a specially formed sleeve and a strut adapted thereto, in which there is used a bayonet locking means, and in which the strut is secured in the sleeve by means of screws at the bottom of the sleeve. Similar systems are shown in GB 1,048,810 and US 3,841,695. In all said known systems the sleeve can be locked against movement upward in the sleeve but only to a restricted degree against large or small side movements (staggering) in the sleeve. In several of the priorly known solutions the strut has to be secured from the bottom of the sleeve by means of screws or bolts. This is a time consuming and complicated work. There is also a risk that the locking screws become un-threaded upon long lasting and bumpy driving of the vehicle.

The basis of the invention is the problem of providing a securing system comprising struts adapted to be mounted in sleeves which are stationary mounted in different types of transport vehicles, and in which the system is formed so that
- the sleeve can be secured so as not to stagger or sway to and fro in the sleeve when driving the vehicle without load,
- the strut can be secured quickly and simply,
- the securing means for the strut are easily available in convenient positions for the operator,
- the securing means are formed so as to provide a side force against the strut so as to press same into engagement against one or more sides of the mounting sleeve,
- the securing means are formed so as to prevent a movement upwards of the strut in the mounting sleeve,
- the securing means are mounted in the strut,
- the securing means for the strut can optionally be placed facing out or in,
- the securing means preferably have a resilient action,
- the strut can simply be released by active releasing of the securing means.

The sleeve and the strut are, as known in the art, formed with a polygonal cross section shape, for instance an 8-edge cross section shape, and the strut preferably is formed so that the securing means can be mounted in recesses of the sleeve, in part inserted in contact with the exterior side of the strut.

According to the invention, which is defined by the features of claim 1, the strut comprises locking means in the form of a twin wedge having a first wedge part, which is vertically locked in the strut but can be pressed out towards on adjacent wall of the sleeve, and a second wedge part which is vertically displaceable in relation to the strut and in relation to the first wedge part, and in which said second wedge part is arranged so that it can be displaced downwards and upwards, respectively, a compression spring arranged for forcing said second wedge part towards said first wedge part by the action of an eccentric adjustment shaft, thereby forcing out said first mentioned wedge part, and in that the sleeve is formed with locking means co-operating with said first wedge part for preventing a movement upwards of the strut in its locked position in the sleeve when the strut is in its locked position.

The locking pin is formed so that it can be set into two stable positions, a locking position for the strut arranged in that the strut is pressed down by the second wedge part over a compression spring which, in turn, provides an optimum strong pressing down of the second wedge part and thereby a forcing outwards of the first wedge part, and a releasing position which is taken for raising or pressing up the second wedge part, and which is provided by a direct mechanical lifting up of the second wedge part and thereby a releasing of the first wedge part.

The sleeve is formed with a locking means adapted to prevent a lifting up of the sleeve when the first wedge part is fold out, and said first wedge part thereby is formed with an edge which engages underneath the locking means of the sleeve when said first wedge part is pressed out. Said locking means can be a slot in the sleeve or any part connected thereto, or it can be a hook against which the fold out part of the first wedge will engage.

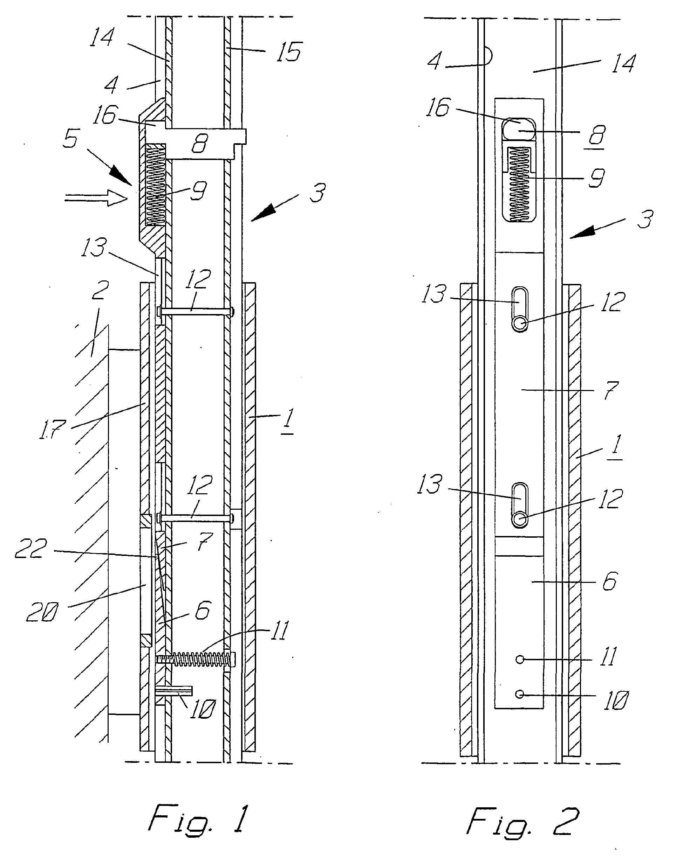

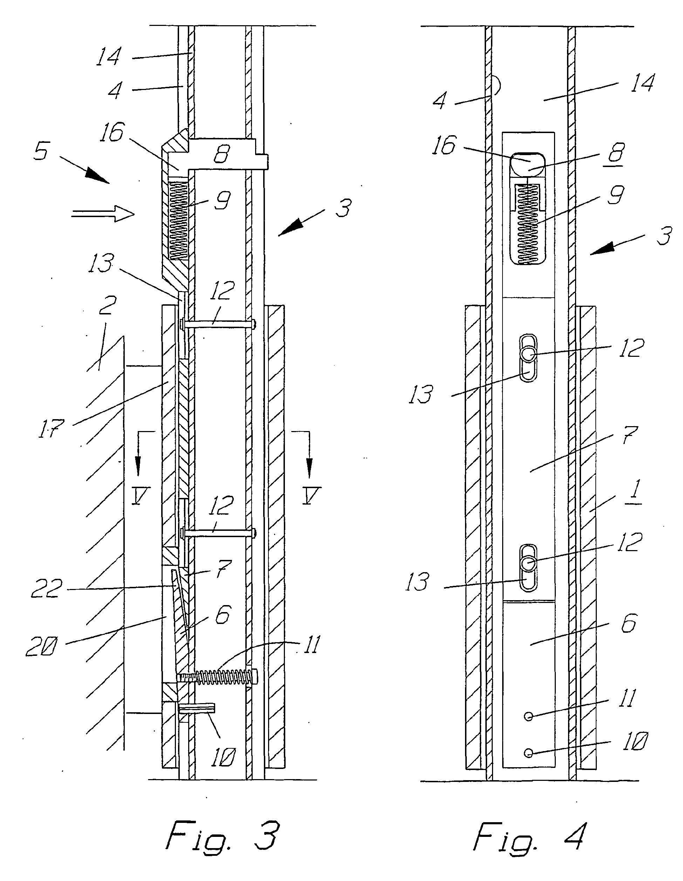

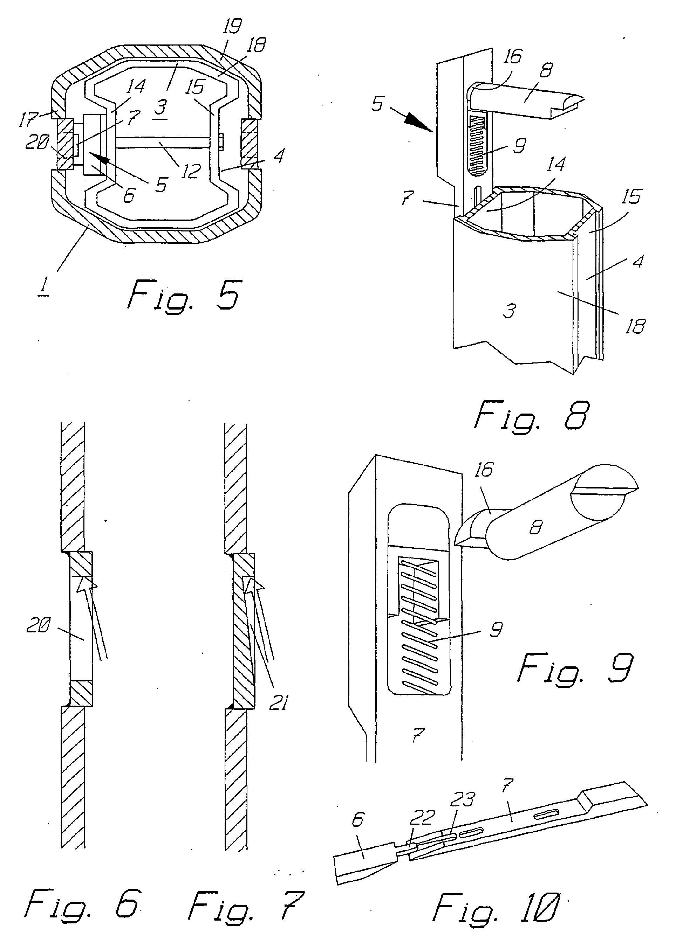

Now the invention is to be described more closely in connection to the accompanying drawings, in which figure 1 shows a cross section view through a stationary sleeve and a strut according to the inventionin which the strut has been moved down into the sleeve, and saud strut is formed with locking means and is shown in releasing position. Figure 2 shows the same arrangement as in figure 1 seen following the arrow of figure 1. Figures 3 and 4 show the arrangement according to the invention similarly to figures 1 and 2 but with the locking means of the strut in locking position. Figure 5 is a cross section view through the apparatus according to the invention, seen along line V-V of figure 3. Figure 6 is a vertical cross section view through a part of a sleeve and showing a first embodiment of the locking means of the sleeve, and figure 7 similarly shows an alternative locking means for the sleeve. Figure 8 is a fragmentary perspective view showing of a part of a strut having a locking means for the strut mounted thereon. Figure 9 is a perspective view showing a detail of the locking means of the sleeve in an exploded view, and figure 10 diagrammatically shows a first and a second wedge means comprised in the sleeve locking means according to the invention.

The invention can be applied in a conventional sleeve 1 which is stationary mounted, for instance against the side of a transport vehicle 2, and which houses the lower part of a strut 3, which is most clearly shown fragmentarily in figure 8. In a recess 4 at a side of the strut 3 a locking means 5 is mounted, which generally comprises a lower wedge part 6, an upper wedge part 7, an adjustment shaft or a locking pin 8 and a compression spring 9 which, at the upper side thereof, is guided in a yoke, and which together with parts of the locking pin 8 is housed in a cavity of the upper part of the displaceable upper wedge 7.

The first wedge part 6 is locked in the vertical direction by means of a locking pin at the lower part of the wedge, and it is capable of being fold out with the upper part thereof against the action of resetting compression spring 11. The second wedge part 7 is displaceable in the longitudinal direction of the strut and is kept in a displaceable position against the strut by means of two holder bolts 12 which are fixedly mounted in the strut. The displaceable wedge is capable of sliding on the holder bolts 12 by slots 13 in the wedge.

The displacing of the second (the upper) wedge 7 is made by means of a locking pin 8 which is formed so that it can take two stable positions, a release position which is shown in figures 1 and 2 and a locking position which is shown in figures 3 and 4. The locking pin 8 is rotatably mounted in two opposed walls 14 and 15 of the strut. For making such rotation possible the locking pin 8 is, at the free end thereof, formed with a key shoulder or a corresponding means, which can be engaged at the exterior side of the strut. The locking pin 8 is formed as an eccenter pin having a collar 16 extending radially outside half of the periphery of the locking pin. As known in the art said collar 16 is formed with rounded corners and with flat upper and lower sides. The projecting part of the collar 16 makes it possible to press down and to lift up the displaceable wedge 7. In figures 1 and 2 the locking pin is shown in the release position. When rotating the locking pin over 180°, as shown in figures 3 and 4, the projecting collar presses down the spring 9, which, in turn, resiliently presses down the displaceable wedge 7. By such displacement said wedge 7 presses out the lower wedge 6 towards the adjacent wall 17 of the sleeve 1, whereby the two opposed bevelled surfaces of the strut 3 are pressed against corresponding bevelled surfaces 19 of the sleeve.

For preventing a displacement upwards of the sleeve, when in locked position, said sleeve 1 can be formed with a through slot 20, as shown in figure 6, or a hook slot 21, as shown in figure 7, and the wedges 6 and 7 are formed as shown in figure 10. The slot 20 and the hook slot 21, respectively, can be formed as separate objects which are weld connected to the sleeve and which allow a relatively accurate fitting of the strut in the sleeve. As shown in figure 10 the lower wedge 6 is formed with an upwards projecting pin 22 which is displaceable in a slot 23 of the upper wedge 7. When the lower wedge 6 is fold out the pin 22 of said lower wedge 6 enters the slot 20 and comes into engagement underneath the upper edge thereof, or enters the hook slot 21 with the equivalent action.

The strut 3 normally is located moved down in the sleeve 1. When the vehicle is running in loaded condition the load thereof will press the struts out from each other at both sides of the vehicle, and said struts will thereby be kept in stable positions in the sleeves. When moving the vehicle without load (empty transportation) the struts, may, on the contrary, sway in opposite directions depending on unevenesses in the road, or even depending on the speed wind acting on the vehicle. Depending on such movements said struts can be subjected to wear. For preventing wear of the struts said struts 3 are locked in that the locking pin 8 is rotated so that the collar 16 thereof is facing down and presses against the spring 9, which, in turn, presses down the displaceable wedge 7. Said wedge 7 thereby presses out the upper part of the lower wedge 6 so that it forces the strut 3 against the outer bevelled side edges 19 of the sleeve 1 (see figure 5) at the same time as the projecting pin 22 the lower wedge 6 engages the slot 20, or the hook 21 of the strut thereby making it impossible for the strut to become displaced upwards.

When the strut 3 is to be released the locking pin 8 is rotated so that the collar 16 thereof is facing upwards, whereby it, concurrently therewith, presses the displaceable wedge 7 upwards so as to release the lower wedge 6. Said lower wedge 6 thereby releases the strut and makes it possible to lift said strut out of the sleeve.

### REFERENCE NUMERALS

- 1: sleeve
- 2: transport vehicle
- 3: strut
- 4: recess (in 3)
- 5: locking means
- 6: first wedge
- 7: second wedge
- 8: adjustment shaft
- 9: compression spring
- 10: locking pin
- 11: spring lock
- 12: holder bolt
- 13: slot
- 14: wall
- 15: wall
- 16: collar
- 17: side
- 18: bevelled side
- 19: bevelled side
- 20: through slot
- 21: hook slot
- 22: pin
- 23: slot

## Claims

1. A securing system comprising a strut (3) and a sleeve (1), wherein the strut (3) is mounted in the sleeve (1), and suited for use in load platform wagons/trucks, railway wagons, boats and other types of transport craft, in which shocks and/or vibrations may appear, **characterized in that** the strut comprises locking means (5) in the form of a twin wedge having a first wedge part (6) which is vertically locked in the strut (3) but can be pressed out towards an adjacent wall of the sleeve, a compression spring (11) forcing said first wedge part (6) against a wall of the strut, and a second wedge part (7) which is vertically displaceable in relation to the strut (3) and in relation to the first wedge part (6), said second wedge part (7) being arranged so that it can be displaced downwards or upwards, a compression spring (9) arranged for forcing said second wedge part (7) towards said first wedge part (6) by the action of an eccentric locking pin (8), thereby forcing said first mentioned wedge part (6) towards the adjacent wall of the sleeve (1) and into locking means (20; 21) arranged in the sleeve, co-operating with said first wedge part (6), whereby the strut (3) is in its locked position preventing an upward movement of the strut (3).

2. A securing system according to claim 1, **characterized in that** the locking pin (8) is formed so that it can be set in two stable positions, a locking position in which the second wedge part (7) is pressed downwards, and a releasing position in which the second wedge part (7) is pulled or pressed upwards.

3. A securing system according to claim 2, **characterized in that** the locking pin (8) is rotatably mounted in opposed walls (14, 15) of the strut (3) and formed as an eccenter locking pin having a collar (16) arranged at the end of the locking pin and projecting radially over half the periphery of the locking pin (10), whereby the locking position of the displaceable wedge part (7) is obtained rotating the locking pin (8) so that the collar(16) thereof provides a pressing down of the second, displaceable wedge part (7), whereby the first wedge part (6) is pressed out towards the adjacent wall of the sleeve (1).

4. A securing system according to claim 3, **characterized in that** the collar(16) of the locking pin (8) is arranged for pressing down the displaceable upper wedge part (7) via the compression spring (9).

5. A securing system according to claim 4, **characterized in that** the collar (16) of the locking pin (8) and the compression spring (9) are enclosed in a cavity of the second wedge part (7) and the collar (16) is arranged, upon releasing of the locking means for the strut, to mechanically press said displaceable wedge part (7) upwards when the locking pin (8) is rotated to such position that the collar (16) thereof is facing upwards.

6. A securing system according to claim 1, **characterized in that** the locking means (20; 21) of the sleeve (1) is a slot (20) or a hook slot (21) in the sleeve wall, and **in that** said locking means (20; 21) can be fitted, as a separate part, into the sleeve (1).

7. A securing system according to any of the preceding claims, **characterized in that** the first wedge part (6) and the second wedge part (7) are mounted in a vertical recess (4) of the strut (3).

8. A securing system according to any of the preceding claims, **characterized in that** the sleeve (1) and the strut (3) have polygonal cross section shapes, for instance an 8-edge cross section shape, whereby the strut (3) in its locked position is pressed against opposed beveled edges (18, 19) of the sleeve (1).

## Patentansprüche

1. Befestigungssystem umfassend eine Strebe (3) und eine Muffe (1), wobei die Strebe (3) in der Muffe (1) befestigt ist, und zur Verwendung in Ladeflächenwagen/-lastern, Eisenbahnwagen, Booten und anderen Arten von Transportfahrzeugen geeignet ist, in welchen Stöße und/oder Vibrationen auftreten können,
**dadurch gekennzeichnet, daß** die Strebe Sperrmittel (5) in der Form eines Doppelkeils mit einem ersten Keilteil (6), welches vertikal in der Strebe (3) gesperrt ist, aber auf eine benachbarte Wandung der Muffe hinausgedrückt werden kann, eine Druckfeder (11), die den ersten Keilteil (6) gegen eine Wandung der Strebe drückt, und einen zweiten Keilteil (7), welcher vertikal verlagerbar bezüglich der Strebe (3) in Bezug auf den ersten Keilteil (6) ist, wobei der zweite Keilteil (7) so angeordnet ist, daß er nach unten oder oben verlagert werden kann, eine Druckfeder (9) umfaßt, die angeordnet ist, um den zweiten Keilteil (7) auf den ersten Keilteil (6) durch Einwirkung eines exzentrischen Sperrstifts (8) zu drücken, wodurch der zu erst genannte Keilteil (6) auf die benachbarte Wandung der Muffe (1) und in ein Sperrmittel (20; 21), das in der Muffe angeordnet ist, gedrückt wird, mit dem ersten Keilteil (6) zusammenwirkend, wodurch die Strebe (3) in ihrer gesperrten Position ist und eine nach oben gerichtete Bewegung der Strebe (3) verhindert.

2. Befestigungssystem nach Anspruch 1, **dadurch gekennzeichnet, daß** der Sperrstift (8) ausgebildet ist, um in zwei stabile Positionen gebracht zu werden, eine Sperrposition, in welcher der zweite Keilteil (7) nach unten gedrückt wird, und eine lösende Position, in welcher der zweite Keilteil (7) nach oben gezogen oder gedrückt wird.

3. Befestigungssystem nach Anspruch 2, **dadurch gekennzeichnet, daß** der Sperrstift (8) in entgegengesetzten Wandungen (14, 15) der Strebe (3) drehbar befestigt ist und als Exzentersperrstift mit einer Auskragung (16) ausgebildet ist, die am Ende des Sperrstifts angeordnet ist und radial über die Hälfte des Umfangs des Sperrstifts (10) herausragt, wodurch die Sperrposition des verlagerbaren Keilteils (7) durch Drehen des Sperrstifts (8) erreicht wird, so daß die Auskragung (16) davon ein Nachuntendrücken des zweiten, verlagerbaren Keilteils (7) bereitstellt, wodurch der erste Keilteil (6) nach außen auf die benachbarte Wandung der Muffe (1) gedrückt wird.

4. Befestigungssystem nach Anspruch 3, **dadurch gekennzeichnet, daß** die Auskragung (16) des Sperrstifts (8) angeordnet ist, um den verlagerbaren oberen Keilteil (7) durch die Druckfeder (9) nach unten zu drücken.

5. Befestigungssystem nach Anspruch 4, **dadurch gekennzeichnet, daß** die Auskragung (16) des Sperrstifts (8) und die Druckfeder (9) in einem Hohlraum des zweiten Keilteils (7) eingefaßt sind und die Auskragung (16) angeordnet ist, um nach dem Lösen des Sperrmittels der Strebe den verlagerbaren Keilteil (7) mechanisch nach oben zu drücken, wenn der Sperrstift (8) in eine solche Position gedreht wird, daß die Auskragung (16) davon nach oben zeigt.

6. Befestigungssystem nach Anspruch 1, **dadurch gekennzeichnet, daß** das Sperrmittel (20; 21) der Muffe (1) eine Nut (20) oder Hakennut (21) in der Muffenwandung ist und **dadurch**, daß das Sperrmittel (20; 21) als separater Teil in die Muffe (1) eingepaßt werden kann.

7. Befestigungsmittel nach einem der vorstehenden Ansprüche, **dadurch gekennzeichnet, daß** der erste Keilteil (6) und der zweite Keilteil (7) in einer vertikalen Aussparung (4) der Strebe (3) befestigt sind.

8. Befestigungssystem nach einem der vorstehenden Ansprüche, **dadurch gekennzeichnet, daß** die Muffe (1) und die Strebe (3) polygone Querprofilformen haben, zum Beispiel eine achtkantige Querprofilform, wodurch die Strebe (3) in ihrer gesperrten Position gegen gegenüberliegende angefaste Kanten (18, 19) der Muffe (1) gedrückt wird.

## Revendications

1. Système de fixation comprenant un potelet (3) et un manchon (1), dans lequel le potelet (3) est monté dans le manchon (1) et approprié pour être utilisé dans des wagons/camions de plate-forme de chargement, des wagons ferroviaires, des bateaux et d'autres types d'embarcations de transport, dans lesquels des chocs et/ou des vibrations peuvent se produire, **caractérisé en ce que** le potelet comprend des moyens de verrouillage (5) sous la forme d'un double coin ayant une première partie de coin (6) qui est verrouillée dans le sens vertical dans le potelet (3) mais peut être pressée vers l'extérieur vers une paroi adjacente du manchon, un ressort de compression (11) forçant ladite première partie de coin (6) contre une paroi du potelet et une deuxième partie de coin (7) qui peut être déplacée dans le sens vertical par rapport au potelet (3) et par rapport à la première partie de coin (6), ladite deuxième partie de coin (7) étant agencée de telle sorte qu'elle peut être déplacée vers le bas ou vers le haut, un ressort de compression (9) agencé pour forcer ladite deuxième partie de coin (7) vers ladite première partie de coin (6) par l'action d'une broche de verrouillage excentrée (8), forçant ainsi ladite première partie de coin mentionnée (6) vers la paroi adjacente du manchon (1) et dans le moyen de verrouillage (20 ; 21) agencé dans le manchon, coopérant avec ladite première partie de coin (6), ce qui entraîne que le potelet (3) se trouve dans sa position verrouillée empêchant un mouvement vers le haut du potelet (3).

2. Système de fixation selon la revendication 1, **caractérisé en ce que** la broche de verrouillage (8) est formée de telle sorte qu'elle peut être placée dans deux positions stables, une position de verrouillage dans laquelle la deuxième partie de coin (7) est pressée vers le bas et une position de libération dans laquelle la deuxième partie de coin (7) est tirée ou pressée vers le haut.

3. Système de fixation selon la revendication 2, **caractérisé en ce que** la broche de verrouillage (8) est montée en rotation dans des parois opposées (14, 15) du potelet (3) et formée comme une broche de verrouillage excentrée ayant un collier (16) agencé au niveau de l'extrémité de la broche de verrouillage et faisant saillie dans le sens radial sur la moitié de la périphérie de la broche de verrouillage (10), ce qui entraîne que la position de verrouillage de la partie de coin pouvant être déplacée (7) est obtenue en faisant tourner la broche de verrouillage (8) de telle sorte que le collier (16) de celle-ci produit une pression vers le bas du la deuxième partie de coin pouvant être déplacée (7), ce qui entraîner que la première partie de coin (6) est pressée vers l'extérieur vers la paroi adjacente du manchon (1).

4. Système de fixation selon la revendication 3, **caractérisé en ce que** le collier (16) de la broche de verrouillage (8) est agencé pour presser vers le bas la partie de cale supérieure pouvant être déplacée (7) par le biais du ressort de compression (9).

5. Système de fixation selon la revendication 4, **caractérisé en ce que** le collier (16) de la broche de verrouillage (8) et le ressort de compression (9) sont enfermés dans une cavité de la deuxième partie de cale (7) et le collier (16) est agencé, lors de la libération du moyen de verrouillage pour le potelet, afin de presser de manière mécanique ladite partie de cale pouvant être déplacée (7) vers le haut lorsque la broche de verrouillage (8) est entraînée en rotation vers une position telle que le collier (16) de celle-ci fait face vers le haut.

6. Système de fixation selon la revendication 1, **caractérisé en ce que** le moyen de verrouillage (20 ; 21) du manchon (1) est une fente (20) ou une fente à crochet (21) dans la paroi du manchon et **en ce que** ledit moyen de verrouillage (20 ; 21) peut être ajusté, comme une partie séparée, dans le manchon (1).

7. Système de fixation selon l'une quelconque des revendications précédentes, **caractérisé en ce que** la première partie de cale (6) et la deuxième partie de cale (7) sont montées dans un évidement vertical (4) du potelet (3).

8. Système de fixation selon l'une quelconque des revendications précédentes, **caractérisé en ce que** le manchon (1) et le potelet (3) ont des formes en section transversale polygonales, par exemple une forme en section transversale, à 8 bords, ce qui entraîne que le potelet (3) dans sa position verrouillée est pressé contre des bords en biseau opposés (18, 19) du manchon (1).
